# EUROPÄISCHE PATENTSCHRIFT

(11) **EP 2 634 538 B1**
(45) Veröffentlichungstag und Bekanntmachung des Hinweises auf die Patenterteilung: **09.01.2019**
(21) Anmeldenummer: 12194761.8
(22) Anmeldetag: 29.11.2012
(51) Int. Cl.: G01D 5/347

(54) **Längenmesseinrichtung**
Length measuring device
Dispositif de mesure de longueur

(30) Priorität: 01.03.2012 DE 102012203193
(43) Veröffentlichungstag der Anmeldung: 04.09.2013
(73) Patentinhaber: Dr. Johannes Heidenhain GmbH, 83301 Traunreut (DE)
(72) Erfinder: Schmöller, Markus, 83278 Traunstein (DE); Steber, Michael, 83324 Ruhpolding (DE)

(56) Entgegenhaltungen:
- EP-A2- 2 306 157
- DE-A1- 2 448 028
- DE-A1- 3 412 879
- DE-A1- 10 302 880
- DE-A1- 19 906 253

## Beschreibung

Die Erfindung betrifft eine Längenmesseinrichtung nach dem Oberbegriff des Anspruchs 1.

Eine derartige Längenmesseinrichtung ist beispielsweise in der EP 0 418 212 A2 beschrieben. Derartige Längenmesseinrichtungen werden gekapselte Längenmesseinrichtungen genannt und sie dienen zur Positionsmessung zweier relativ zueinander verschiebbarer Objekte. Gekapselte Längenmesseinrichtungen werden insbesondere bei Bearbeitungsmaschinen zur Messung der Relativbewegung eines Werkzeugs bezüglich eines zu bearbeitenden Werkstücks eingesetzt.

Die aus der EP 0 418 212 A2 bekannte Längenmesseinrichtung besteht aus einem Hohlprofil, das einen darin befestigten Maßstab vor Umwelteinflüssen schützt. Die stirnseitigen Enden des Hohlprofils sind jeweils mit einem Endstück abgeschlossen, das auch zum Anbau des Hohlprofils an einem der zu messenden Objekte ausgebildet ist. Das Endstück weist ein Einsatzteil auf, mit dem es in die lichte Öffnung des Hohlprofils eintaucht. An dem Endstück ist eine Dichtung angeordnet, die eine Abdichtung zwischen dem Endstück und dem Hohlprofil bewirkt. Zur Aufnahme der Dichtung befindet sich in dem Einsatzteil eine Nut.

Eine umfangsmäßige Abdichtung zwischen einem Endstück und einem Hohlprofil in Form eines Arbeitszylinders ist auch in der DE 24 48 028 A1 beschrieben.

Anstelle einer über den Umfang wirkenden Abdichtung wird bei Längenmesseinrichtungen auch das Konzept einer Stoßdichtung eingesetzt. Beispiele dazu finden sich in der DE 34 12 879 A1 und der EP 2 306 157 A2. Dabei ist das stirnseitige Ende eines einen Maßstab tragenden Hohlprofils mittels eines Endstückes verschlossen und zwischen dem stirnseitigen Ende des Hohlprofils und dem darauf aufgesetzten Endstück ist eine Dichtung eingesetzt.

Der Erfindung liegt die Aufgabe zugrunde, eine Längenmesseinrichtung zu schaffen, die stirnseitig einfach und effektiv abdichtbar ist und mit der eine reproduzierbare Positionsmessung ermöglicht wird.

Diese Aufgabe wird erfindungsgemäß durch die Merkmale des Anspruchs 1 gelöst.

Gemäß der Erfindung umfasst eine Längenmesseinrichtung ein sich in einer Längsrichtung erstreckendes Hohlprofil, in dessen Innenraum ein Maßstab mit einer Messteilung angeordnet ist. Zumindest ein stirnseitiges Ende des Hohlprofils ist mit einem Endstück verschlossen, das an dem Hohlprofil ortsfest fixiert ist. Das Endstück trägt ein Dichtelement zur Abdichtung des Hohlprofils. Dieses Dichtelement liegt mit seiner Umfangsfläche an der Innenseite des Hohlprofils abdichtend an. Der Querschnitt des Dichtelements entspricht zumindest weitgehend dem Querschnitt der stirnseitigen Öffnung des Hohlprofils. Das Dichtelement ist also derart ausgebildet, dass es die lichte Weite des Hohlprofils ausfüllt und überbrückt, insbesondere weist es eine plattenförmige Form auf. Dies hat den Vorteil, dass das Dichtelement nur an Flächen des Hohlprofils abdichten muss, wobei eine Abdichtung des Endstücks gegenüber dem Dichtelement für eine Abdichtung des Innenraums des Hohlprofils nicht zwingend erforderlich ist.

Zur einfachen Ausrichtung des Endstücks gegenüber dem Hohlprofil weist dieses einen Eintauchbereich auf, mit dem es in den Innenraum des Hohlprofils eintaucht. Das Dichtelement ist dabei an dem in das Hohlprofil weisenden Ende des Eintauchbereichs angeordnet.

Das Dichtelement ist an dem Endstück derart angebracht, dass es gegenüber dem Endstück quer zur Längsrichtung des Hohlprofils verschiebbar bzw. verlagerbar ist. Die Verschiebbarkeit erlaubt einerseits ein Anbringen des Dichtelementes an dem Endstück durch Aufschieben, wodurch eine einfache Vormontage der Baugruppe Endstück und Dichtelement ermöglicht wird. Die Verlagerbarkeit in Form von schwimmender Lagerung des Dichtelementes gegenüber dem Endstück quer zur Längsrichtung gewährleistet andererseits auch, dass sich das Dichtelement bei allen Einbaulagen des Endstücks selbständig im Hohlprofil zentriert, wodurch einerseits eine gute Abdichtung gewährleistet ist und andererseits auch die Messgenauigkeit der Längenmesseinrichtung nicht nachteilig beeinflusst wird, da durch das Dichtelement keine unzulässigen Kräfte auf das den Maßstab tragende Hohlprofil ausgeübt werden. Da das Dichtelement die lichte Weite des Hohlprofils überbrückt und quer zur Längsrichtung beweglich am Endstück angebracht ist, wird das Dichtelement bei einer auf sie seitlich wirkenden Kraft an die gegenüberliegende Fläche des Hohlprofils gedrängt, wodurch die Selbstzentrierung gewährleistet ist.

Eine sichere Abdichtung und Selbstzentrierung ist besonders gewährleistet, wenn das Dichtelement nur an den Bereichen, die gegenüber den Innenflächen des Hohlprofils abdichtend wirken aus relativ nachgiebigem und somit anschmiegsamem Material ausgebildet ist. Der Mittenbereich des Dichtelementes, welcher die lichte Weite des Hohlprofils ausfüllt, ist demgegenüber aus einem unnachgiebigeren Material gefertigt.

In besonders bevorzugter Weise ist das Endstück nicht nur zum stirnseitigen Abschluss des Hohlprofils ausgebildet, sondern auch zum Anbau des Hohlprofils an einem der zu messenden Objekte. Hierzu kann das Endstück eine Bohrung zur Aufnahme einer Schraube oder eines Bolzens aufweisen, durch die bzw. durch den das Endstück mit dem daran befestigten Hohlprofil getragen wird. Anstelle der Bohrung können in bekannter Weise auch Winkel, Bolzen oder Kugeln am Endstück angeordnet sein, mit denen das Hohlprofil am zu messenden Objekt befestigt werden kann.

Wenn die Längenmesseinrichtung in rauer Umgebung eingesetzt werden soll, wird im Innenraum ein Überdruck erzeugt. Um dies zu ermöglichen, ist am Endstück ein Druckluftanschluss vorgesehen, über den Druckluft in den Innenraum des Hohlprofils geleitet werden kann.

Das Dichtelement ist in vorteilhafter Weise derart angeordnet und ausgebildet, dass die vom Druckluftanschluss eingeleitete Druckluft auf das Dichtelement auftrifft und dort umgelenkt wird. Die umgelenkte Druckluft tritt an einer in den Innenraum des Hohlprofils weisenden Austrittsöffnung des Dichtelementes aus. Vorzugsweise weist das Dichtelement zwischen dem Ort, an dem die eingeleitete Druckluft auftrifft und der Austrittsöffnung einen Führungskanal für die Druckluft auf.

Die Erfindung wird mit Hilfe von Ausführungsbeispielen näher erläutert.

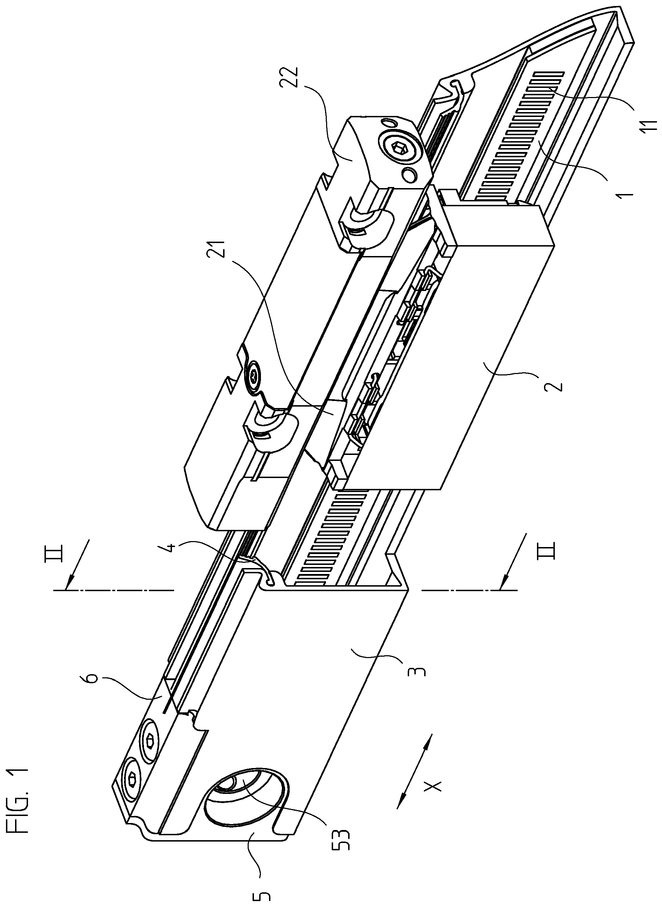

Dabei zeigt
- Figur 1: eine Längenmesseinrichtung im Teilschnitt;
- Figur 2: einen Querschnitt II-II der Längenmesseinrichtung gemäß Figur 1;
- Figur 3: eine perspektivische Ansicht eines Dichtelementes;
- Figur 4: das Dichtelement gemäß Figur 3 in einer weiteren perspektivischen Ansicht;
- Figur 5: ein Endstück der Längenmesseinrichtung bei der Montage des Dichtelementes;
- Figur 6: das Endstück mit dem Dichtelement bei der Montage an ein Hohlprofil;
- Figur 7: das Endstück mit dem Dichtelement im Querschnitt;
- Figur 8: eine perspektivische Ansicht einer weiteren Ausgestaltung eines Dichtelementes;
- Figur 9: eine weitere Ansicht des Dichtelementes gemäß Figur 8, und
- Figur 10: ein Endstück mit dem Dichtelement der Figuren 8 und 9 im Querschnitt.

Die Erfindung wird anhand einer lichtelektrischen Längenmesseinrichtung näher erläutert. Diese Längenmesseinrichtung besteht aus den Komponenten Maßstab 1 und Abtasteinheit 2, die in Längsrichtung X relativ zueinander bewegbar sind. Zur Messung einer Position zweier in Längsrichtung X relativ zueinander verschiebbarer Objekte wird der Maßstab 1 an eines dieser Objekte und die Abtasteinheit 2 an das andere dieser beiden Objekte befestigt. Die Abtasteinheit 2 tastet bei der Positionsmessung eine Messteilung 11 des Maßstabs 1 ab und bildet daraus Positionsmesswerte. Die Messteilung 11 kann als Inkrementalspur mit einer Folge von gleichbeabstandeten Markierungen, als mehrspurige Absolutspur oder als einspurige Absolutspur mit einer in Längsrichtung X aufeinanderfolgend angeordneten absoluten Codierung, auch Pseudo-Random-Code genannt, ausgebildet sein. Die Erfindung ist nicht auf das lichtelektrische Abtastprinzip beschränkt, die Markierungen können auch induktiv, magnetisch oder kapazitiv abtastbar ausgestaltet sein.

Der Maßstab 1 ist in einem sich in Längsrichtung X erstreckenden Hohlprofil 3 geschützt untergebracht. Der Maßstab 1 ist am Hohlprofil 3 befestigt, indem er beispielsweise an der Innenseite eines Schenkels des U-förmigen Hohlprofils 3 fixiert ist, insbesondere durch einen Klebstoff. In Längsrichtung X verlaufend weist das Hohlprofil 3 eine schlitzförmige Öffnung auf, die durch dachförmig angeordnete Dichtlippen 4 abgedeckt ist. Durch die Dichtlippen 4 ragt ein schwertförmiger Mitnehmer 21, an dem die Abtasteinheit 2 befestigt ist. Außerhalb des Hohlprofils 3 ist an dem Mitnehmer 21 ein Montageelement 22 angeordnet, das dazu ausgelegt ist, an einem der beiden zu messenden Objekte befestigt zu werden, beispielsweise durch Anschrauben.

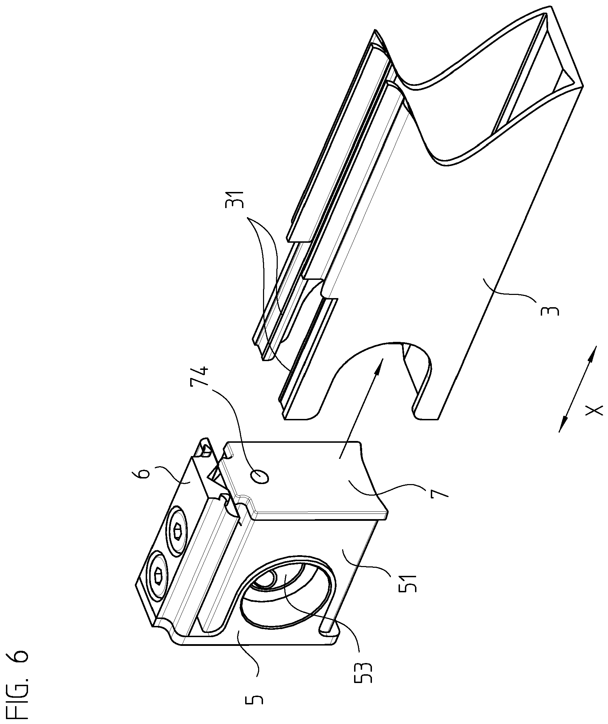

Die beiden stirnseitigen Enden des Hohlprofils 3 sind jeweils mit einem Endstück 5 abgeschlossen, wobei nur eines davon dargestellt ist. Das Endstück 5 ist am Hohlprofil 3 ortsfest fixiert. Im dargestellten Ausführungsbeispiel erfolgt die Fixierung des Endstücks 5 am Hohlprofil 3 mittels eines Klemmstücks 6. Das Klemmstück 6 wird mit dem Endstück 5 verschraubt, wodurch auf einen zwischen dem Klemmstück 6 und dem Endstück 5 angeordneten Abschnitt 31 des Holprofils 3 eine Kraft ausgeübt wird, welche den Abschnitt 31 des Hohlprofils 3 und somit das Hohlprofil 3 selbst mit dem Endstück 5 ortsfest verbindet. Der Abschnitt 31 ist in Figur 6 dargestellt.

Das Endstück 5 ist zum Anbau an einem der zu messenden Objekte ausgebildet. Hierzu weist das Endstück 5 eine Bohrung 53 für eine Befestigungsschraube oder eines Bolzens auf.

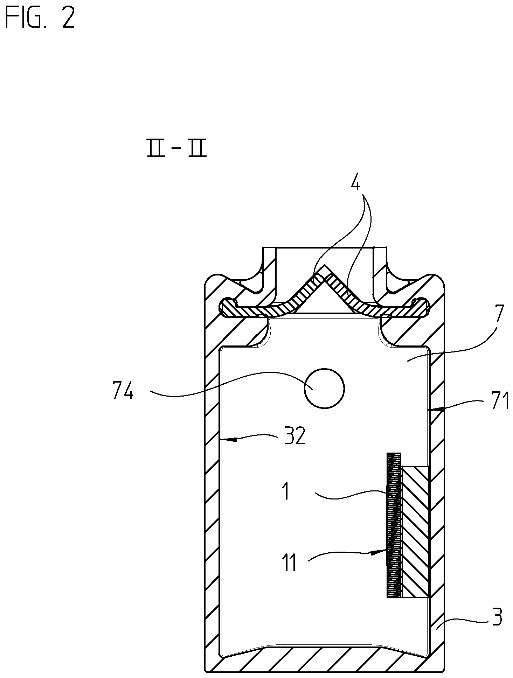

Am Endstück 5 ist ein Dichtelement 7 angeordnet, welches das stirnseitige Ende des Hohlprofils 3 abdichtet. Das Endstück 5 weist einen Eintauchbereich 51 auf, mit dem es in den Innenraum des Hohlprofils 3 eintaucht. Das Dichtelement 7 ist an dem in das Hohlprofil 3 weisenden Ende des Eintauchbereichs 51 des Endstücks 5 angeordnet. Wie insbesondere aus Figur 2 ersichtlich ist, ist das Dichtelement 7 plattenförmig ausgebildet und liegt mit seiner Umfangsfläche 71 an der Innenseite 32 des Hohlprofils 3 dichtend an.

Das Hohlprofil 3 ist U-förmig ausgebildet und weist zwei parallel zueinander verlaufende Schenkel und einen die Schenkel verbindenden Boden auf. Die schlitzförmige Öffnung ist dem Boden gegenüberliegend angeordnet und wird von zwei die Schenkel des Hohlkörpers 3 angeformten Vorsprüngen begrenzt. Der Querschnitt des Eintauchbereichs 51 des Endstücks 5 ist an den Querschnitt des Hohlprofils 3 derart angepasst, dass die Innenflächen der beiden Schenkel, des Bodens und der Vorsprünge an Seitenflächen des Eintauchbereichs 51 anliegen. Die Lage des Endstücks 5 quer zur Längsrichtung X ist somit durch die Innenflächen des Hohlprofils 3 formschlüssig vorgegeben.

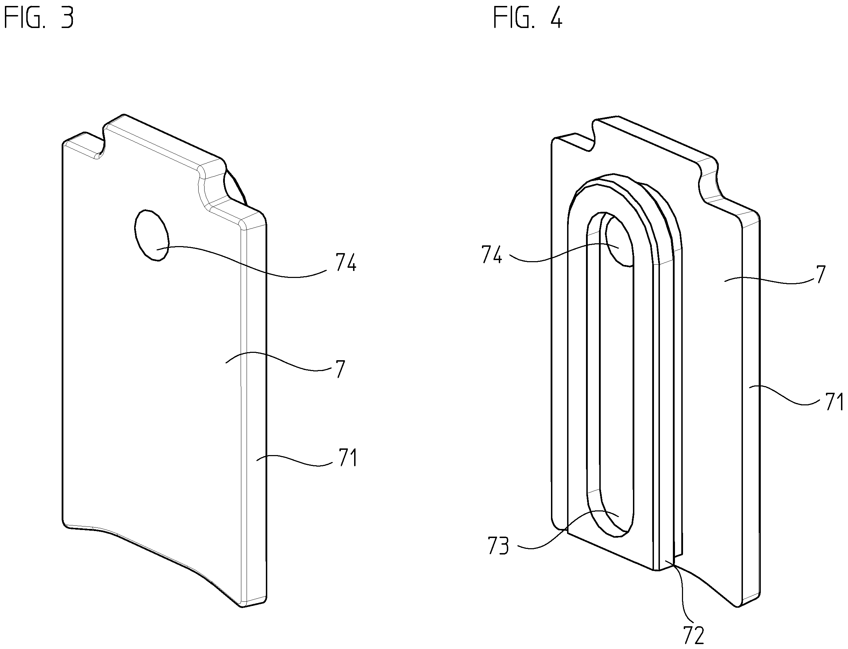

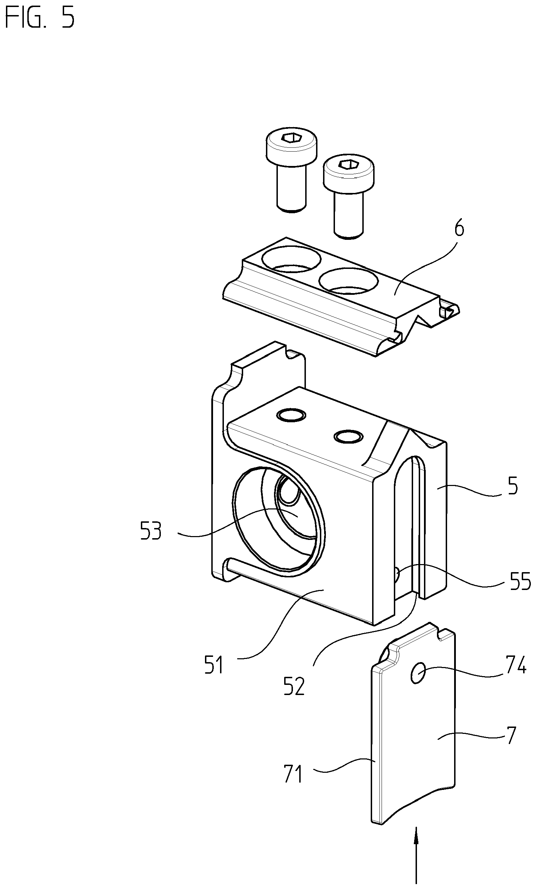

In den Figuren 3 und 4 ist das Dichtelement 7 perspektivisch dargestellt. Die Figur 3 zeigt die in den Innenraum des Hohlprofils 3 weisende Seite und Figur 4 die in Richtung des Endstücks 5 weisende Seite. Das Dichtelement 7 ist an dem Endstück 5 derart angebracht, dass es quer zur Längsrichtung X relativ zum Endstück 5 verschiebbar ist. Hierzu weist das Endstück 5 und das Dichtelement 7 an einander gegenüberliegenden Flächen entsprechende Verbindungselemente 52 und 72 auf, welche einerseits das Dichtelement 5 am Endstück in Längsrichtung X fixieren und andererseits eine Verschiebbarkeit des Dichtelementes 7 quer dazu zulassen. Im Ausführungsbeispiel ist das am Endstück 5 vorgesehene Verbindungelement 52 eine T-Nut, in welche als Verbindungselement 72 des Dichtelementes 7 ein T-förmiger Vorsprung eingreift. Die beiden Verbindungselemente 52 und 72, also die T-Nut und der T-förmige Vorsprung bilden eine quer zur Längsrichtung X wirkende Führung. Diese Führung dient zur einfachen Montage des Dichtelements 7 am Endstück 5, wie in Figur 5 dargestellt ist. Die Anbringung des Dichtelementes 7 am Endstück 5 erfolgt durch Einschieben des T-förmigen Vorsprungs des Dichtelementes 7 in die T-Nut des Endstücks 5 in Pfeilrichtung.

In Figur 6 ist zur weiteren Verdeutlichung der Erfindung ein weiterer Montagezustand dargestellt. Der Eintauchbereich 51 des Endstücks 5 wird mit dem daran angebrachten Dichtelement 7 in Längsrichtung X in die stirnseitige Öffnung des Hohlprofils 3 eingeschoben und das Endstück 5 an dem Hohlprofil 3 ortsfest fixiert, beispielsweise mittels des Klemmstücks 6. Wie bereits ausgeführt und in Figur 2 dargestellt, ist das Dichtelement 7 plattenförmig und hat eine Außenkontur, welche an die Innenkontur des Hohlprofils 3 derart angepasst ist, dass es mit seiner Umfangsfläche 71 an der Innenseite 32 des Hohlprofils 3 abdichtend anliegt. Das Dichtelement 7 ist an dem Endstück 5 derart angebracht, dass es auch während der Montage des Endstücks 5 am Hohlprofil 3 quer zur Längsrichtung X relativ zum Endstück 5 verschiebbar an diesem gelagert ist und sich somit an die aktuelle Lage und die Abmessungen der Innenkontur des Hohlprofils 3 optimal anpasst, indem es sozusagen dort einschwimmt. Die plattenförmige Ausgestaltung des Dichtelementes 7 und die endseitige schwimmende Anordnung an dem Endstück 5 hat den Vorteil, dass Montage- und Fertigungstoleranzen die Dichtigkeit nicht negativ beeinflussen.

Wie in Figur 2 dargestellt ist, weist das Hohlprofil 3 einen rechteckförmigen Querschnitt auf, und zwar mit einem Boden, dem die Vorsprünge und der durch die Dichtlippen 4 abgedeckte Schlitz gegenüberliegen, sowie mit zwei einander gegenüberliegenden Seitenwänden. Die plattenförmige Form des Dichtelementes 7 entspricht dieser Innenkontur bzw. dem Querschnitt des Hohlprofils 3. Die Lage des Eintauchbereichs 51 des Endstücks 5 in dem Hohlprofil 3 quer zur Längsrichtung X ist auch abhängig von der Bearbeitungsgenauigkeit der Flächen des Eintauchbereichs 51, die beim Einschieben mit der Innenkontur des Hohlprofils 3 korrespondieren. Durch die schwimmende Lagerung des Dichtelementes 7 am Endstück 5 wird die Lage des Dichtelementes 7 quer zur Längsrichtung X nicht von der Lage des Eintauchbereichs 51 bestimmt. Das Dichtelement 7 zentriert sich aufgrund der jeweils einander gegenüberliegenden Umfangsflächen 71, die mit einander gegenüberliegenden Innenseiten 32 des Hohlprofils 3 zusammenwirken, im Hohlprofil 4 derart selbsttätig, dass allseitig eine optimale Abdichtung bewirkt wird. Die Verbindung zwischen dem Endstück 5 und dem Dichtelement 7 ermöglicht dem Dichtelement 7 in Richtungen quer zur Längsrichtung X eine Ausgleichsbewegung gegenüber dem Endstück 5, die im Beispiel etwa 0,5 mm beträgt.

Die selbstzentrierende Funktion des plattenförmigen Dichtelementes 7 hat auch einen besonderen Vorteil, wenn die Montage des Hohlprofils 3 mittels des Endstücks 5 an einem der zu messenden Objekte erfolgt. Durch die Befestigung des Endstücks 5 am zu messenden Objekt kann sich nämlich die Lage des Endstücks 5 gegenüber dem Hohlprofil 3 verändern. Durch die schwimmende Lagerung des Dichtelementes 7 am Endstück 5 hat diese Verlagerung keine Auswirkung auf die Dichtwirkung.

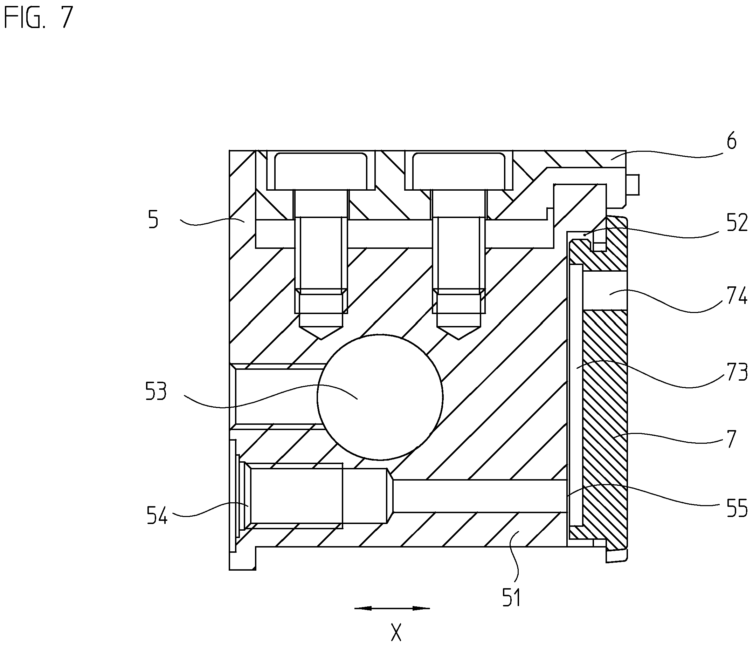

Gekapselte Längenmesseinrichtungen werden häufig an Werkzeugmaschinen eingesetzt, die zur spanenden Bearbeitung von Werkstücken dienen. Um das Eindringen von Kühlflüssigkeiten oder von Spänen in den Innenraum der Längenmesseinrichtung zu verhindern, wird im Innenraum des Hohlprofils 3 ein Überdruck erzeugt. Hierzu ist am Endstück 5 ein Druckluftanschluss 54 vorgesehen, um den Anschluss an eine Druckluftquelle zu ermöglichen. Dieser Druckluftanschluss 54 und die nachfolgend erläuterte Konstruktion ist in Figur 7 dargestellt. Die in das Endstück 5 eingeleitete Druckluft tritt an einer Austrittsöffnung 55 des Endstücks 5 wieder aus. Das plattenförmige Dichtelement 7 ist nun derart angeordnet und ausgebildet, dass die vom Druckluftanschluss 54 ausgehend eingeleitete Druckluft auf das Dichtelement 7 auftrifft. Das Dichtelement 7 weist also eine Fläche auf, die für die eingeleitete Druckluft als Prallfläche wirkt. Das Dichtelement 7 weist weiterhin eine in den Innenraum des Hohlprofils 3 weisende Austrittsöffnung 74 für die Druckluft auf. Das Dichtelement 7 weist zwischen der Austrittsöffnung 55 des Endstücks 5 und der Austrittsöffnung 74 des Dichtelements 7 einen Führungskanal 73 für die Druckluft auf. Die Austrittsöffnung 55 ist also zur Austrittsöffnung 74 quer zur Längsrichtung X versetzt angeordnet.

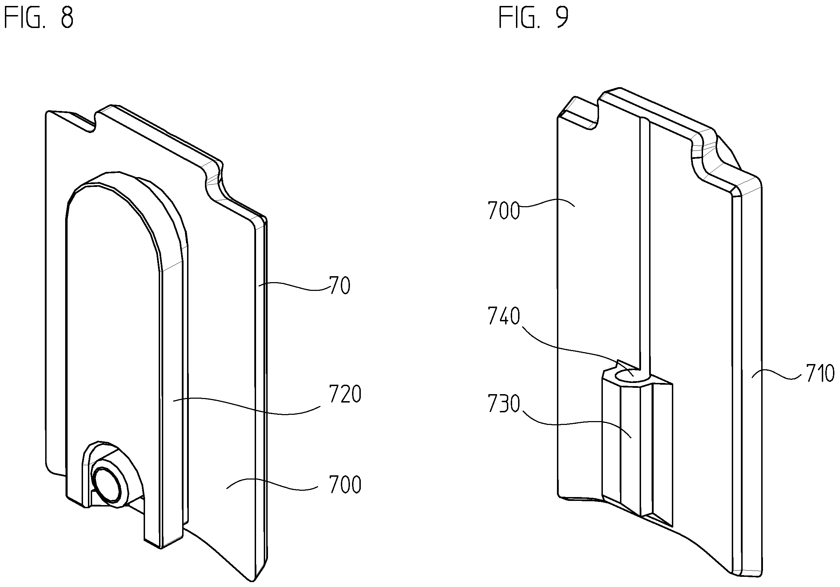

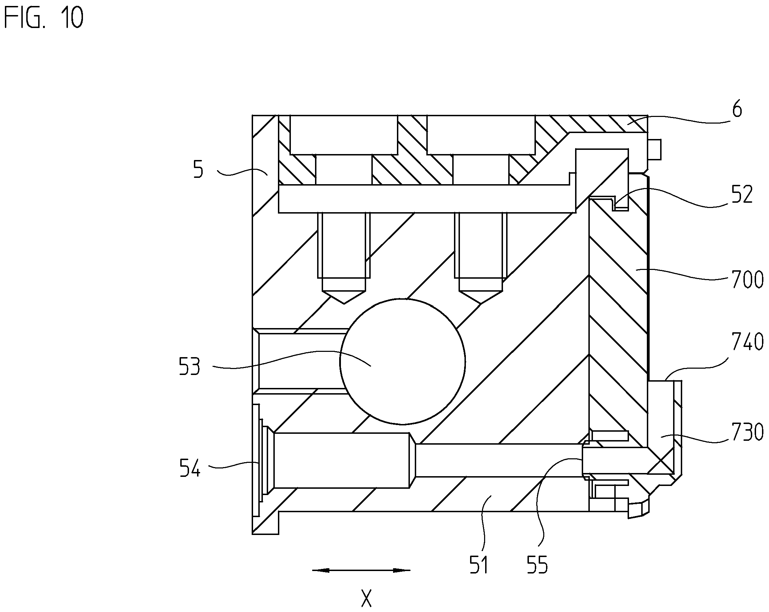

Die Figuren 8 bis 10 zeigen ein zweites Ausführungsbeispiel eines Dichtelementes 700. Übereinstimmend mit dem ersten Ausführungsbeispiel ist dieses Dichtelement 700 plattenförmig ausgebildet und dichtet mit seiner Umfangsfläche 710 an der Innenseite 32 des Hohlprofils 3 das stirnseitige Ende des Hohlprofils 3 ab. Das Dichtelement 700 weist weiterhin auch ein Verbindungselement 720 auf, um an dem Endstück 5 derart befestigt werden zu können, dass es einerseits in Längsrichtung X ortsfest daran fixiert ist und andererseits Ausgleichsbewegungen quer zur Längsrichtung X ermöglicht. Im Unterschied zum ersten Ausführungsbeispiel ist ein Führungskanal 730 für Druckluft an dem Dichtelement 700 auf der in den Innenraum des Hohlprofils 3 weisenden Seite vorgesehen und der Führungskanal 730 endet mit einer Austrittsöffnung 740, welche die in den Innenraum des Hohlprofils 3 eingeleitete Druckluft in Richtung der Dichtlippen 4 richtet.

Als Material für das Dichtelement 7, 700 eignet sich besonders ein Elastomer, wie z.B. NBR, EPDM oder ACM. Das Verbindungselement 72, 720 und der Führungskanal 73, 730 sind vorzugsweise an das plattenförmige Dichtelement 7, 700 durch Anspritzen angeformt.

Zur guten Abdichtung ist zumindest die zur Innenseite 32 des Hohlprofils 3 weisende Umfangsfläche 71, 710 des Dichtelements 7, 700 aus einem gut anschmiegsamen weichen Kunststoff, insbesondere einem Elastomer. Das Dichtelement 7, 700 kann aus einem einzigen Material bestehen, insbesondere aus einem Elastomer als Spritzgussteil hergestellt sein. Alternativ könnte das Dichtelement 7, 700 aus zwei verschiedenen Materialien bestehen, nämlich einem zu Dichtzwecken weichen Material und einem nicht zu Dichtzwecken benötigten härteren Material. Die Herstellung kann in einem Zweikomponenten-Spritzgussverfahren erfolgen, indem der nicht zu Dichtzwecken verwendete Bereich des Dichtelements 7, 700 aus einem härteren Kunststoff, beispielsweise einem Thermoplast wie Polypropylen hergestellt ist.

## Patentansprüche

1. Längenmesseinrichtung, mit
einem sich in einer Längsrichtung (X) erstreckenden Hohlprofil (3); einem an dem Hohlprofil (3) fixierten Endstück (5) zum Verschluss des Hohlprofils (3) an einem seiner Enden;
einem innerhalb des Hohlprofils (3) angeordneten Maßstab (1) mit einer Messteilung (11), welche zur Positionsmessung von einer in Längsrichtung (X) relativ zum Hohlprofil (3) bewegbaren Abtasteinheit (2) abtastbar ist;
einem Dichtelement (7, 700) am Endstück (5) zur stirnseitigen Abdichtung des Hohlprofils (3),
**dadurch gekennzeichnet, dass**
das Dichtelement (7, 700) einen Querschnitt aufweist, der zumindest weitgehend der lichten Weite des Hohlprofils (3) entspricht, und dass das Dichtelement (7, 700) mit seiner Umfangsfläche (71, 710) an einer Innenfläche (32) des Hohlprofils (3) abdichtend anliegt, und dass das Dichtelement (7, 700) an dem Endstück (5) derart angebracht ist, dass es gegenüber dem Endstück (5) quer zur Längsrichtung (X) des Hohlprofils (3) verschiebbar ist, und dass
das Endstück (5) und das Dichtelement (7, 700) jeweils ein Verbindungselement (52, 72, 720) aufweisen, die miteinander eine Führung bilden, um das Dichtelement (7, 700) durch Aufschieben in eine Richtung quer zur Längsrichtung (X) mit dem Endstück (5) zu verbinden.

2. Längenmesseinrichtung nach Anspruch 1, **dadurch gekennzeichnet, dass** das Endstück (5) einen Eintauchbereich (51) aufweist, mit dem es in den Innenraum des Hohlprofils (3) eintaucht, wobei das Dichtelement (7, 700) an dem in das Hohlprofil (3) weisenden Ende des Eintauchbereichs (51) angeordnet ist.

3. Längenmesseinrichtung nach einem der vorhergehenden Ansprüche, **dadurch gekennzeichnet, dass** das Dichtelement (7, 700) aus einem Elastomer besteht.

4. Längenmesseinrichtung nach einem der vorhergehenden Ansprüche, **dadurch gekennzeichnet, dass** das Endstück (5) zum Anbau des Hohlprofils (3) an ein zu messendes Objekt ausgebildet ist.

5. Längenmesseinrichtung nach einem der vorhergehenden Ansprüche, **dadurch gekennzeichnet, dass** das Endstück (5) einen Druckluftanschluss (54) aufweist, um Druckluft in den Innenraum des Hohlprofils (3) zu leiten.

6. Längenmesseinrichtung nach Anspruch 5, **dadurch gekennzeichnet, dass** das Dichtelement (7, 700) derart angeordnet und ausgebildet ist, dass die vom Druckluftanschluss (54) eingeleitete Druckluft auf das Dichtelement (7, 700) auftrifft und umgelenkt wird und weiterhin das Dichtelement (7, 700) eine in den Innenraum des Hohlprofils (3) weisende Austrittsöffnung (74, 740) für die Druckluft aufweist.

7. Längenmesseinrichtung nach Anspruch 6, **dadurch gekennzeichnet, dass** das Dichtelement (7, 700) zwischen dem Ort, an dem die eingeleitete Druckluft auftrifft und der Austrittsöffnung (74, 740) einen Führungskanal (73, 730) für die Druckluft aufweist.

8. Längenmesseinrichtung nach einem der vorhergehenden Ansprüche, **dadurch gekennzeichnet, dass** das Dichtelement (7, 100) derart ausgebildet ist, dass sein Mittenbereich, welcher die lichte Weite des Hohlprofils (3) überbrückt, unnachgiebiger ist als seine Umfangsfläche (71, 710), mit der es an der Innenfläche (32) des Hohlprofils (3) abdichtend anliegt.

9. Längenmesseinrichtung nach Anspruch 8, **dadurch gekennzeichnet, dass** das Dichtelement (7, 700) aus zwei verschiedenen Materialien besteht, nämlich einem ersten Kunststoff an der Umfangsfläche, mit der es an der Innenfläche (32) des Hohlprofils (3) abdichtend anliegt und einem zweiten Kunststoff in seinem Mittenbereich, wobei der zweite Kunststoff unnachgiebiger ist als der erste Kunststoff.

## Claims

1. Length measuring device, comprising
a hollow profile (3) extending in a longitudinal direction (X);
an end piece (5) fixed to the hollow profile (3) to close the hollow profile (3) at one of its ends;
a scale (1) arranged within the hollow profile (3) and having a measurement graduation (11) which, for position measurement, can be scanned by a scanning unit (2) that is movable in the longitudinal direction (X) relative to the hollow profile (3);
a sealing element (7, 700) on the end piece (5) for sealing the end of the hollow profile (3),
**characterized in that**
the sealing element (7, 700) has a cross section which at least largely corresponds to the clear width of the hollow profile (3), and **in that** the sealing element (7, 700) rests in a sealing manner with its circumferential surface (71, 710) on an inner surface (32) of the hollow profile (3), and **in that**
the sealing element (7, 700) is fitted to the end piece (5) in such a way that it can be displaced with respect to the end piece (5) transversely with respect to the longitudinal direction (X) of the hollow profile (3), and **in that** the end piece (5) and the sealing element (7, 700) each have a connecting element (52, 72, 720), which form a guide with each other in order to connect the sealing element (7, 700) to the end piece (5) by being pushed on in a direction transverse to the longitudinal direction (X).

2. Measuring device according to Claim 1, **characterized in that** the end piece (5) has an insertion region (51), with which it dips into the interior of the hollow profile (3), wherein the sealing element (7, 700) is arranged on the end of the insertion region (51) that points into the hollow profile (3).

3. Length measuring device according to one of the preceding claims, **characterized in that** the sealing element (7, 700) consists of an elastomer.

4. Length measuring device according to one of the preceding claims, **characterized in that** the end piece (5) is designed for the attachment of the hollow profile (3) to an object to be measured.

5. Length measuring device according to one of the preceding claims, **characterized in that** the end piece (5) has a compressed air connection (54) in order to lead compressed air into the interior of the hollow profile (3).

6. Length measuring device according to Claim 5, **characterized in that** the sealing element (7, 700) is arranged and formed in such a way that the compressed air lead in from the compressed air connection (54) impinges on the sealing element (7, 700) and is deflected, and furthermore, the sealing element (7, 700) has an outlet opening) 74, 740) for the compressed air, which points into the interior of the hollow profile (3).

7. Measuring device according to Claim 6, **characterized in that**, between the locations at which the compressed air introduced impinges and the outlet opening (74, 740), the sealing element (7, 700) has a guide channel (73, 730) for the compressed air.

8. Length measuring device according to one of the preceding claims, **characterized in that** the sealing element (7, 700) is formed in such a way that its central region, which spans the clear width of the hollow profile (3), is less flexible than its circumferential surface (71, 710) with which it rests in a sealing manner on the inner surface (32) of the hollow profile (3).

9. Length measuring device according to Claim 8, **characterized in that** the sealing element (7, 700) consists of two different materials, namely a first plastic on the circumferential surface with which it rests on the sealing manner on the inner surface (32) of the hollow profile (3), and the second plastic in its central region, wherein the second plastic is less flexible than the first plastic.

## Revendications

1. Dispositif de mesure de longueur, comprenant :
un profilé creux (3) s'étendant dans une direction longitudinale (X) ;
un embout (5) fixé au profilé creux (3) pour la fermeture du profilé creux (3) au niveau de l'une de ses extrémités ;
une échelle de mesure (1) disposée à l'intérieur du profilé creux (3) avec une graduation (11), qui, pour la mesure de position, peut être balayée par une unité de balayage (2) déplaçable dans la direction longitudinale (X) par rapport au profilé creux (3) ;
un élément d'étanchéité (7, 700) au niveau de l'embout (5) pour l'étanchéité du côté frontal du profilé creux (3),
**caractérisé en ce que**
l'élément d'étanchéité (7, 700) présente une section transversale qui correspond au moins essentiellement à la dimension intérieure du profilé creux (3), et **en ce que**
l'élément d'étanchéité (7, 700) s'applique hermétiquement avec sa surface périphérique (71, 710) contre une surface intérieure (32) du profilé creux (3), et **en ce que**
l'élément d'étanchéité (7, 700) est monté au niveau de l'embout (5) de telle sorte qu'il puisse être déplacé par rapport à l'embout (5) transversalement à la direction longitudinale (X) du profilé creux (3), et **en ce que**
l'embout (5) et l'élément d'étanchéité (7, 700) présentent chacun un élément de connexion (52, 72, 720) qui forment ensemble un guide, afin de connecter l'élément d'étanchéité (7, 700) à l'embout (5) par enfoncement dans une direction transversale à la direction longitudinale (X).

2. Dispositif de mesure de longueur selon la revendication 1, **caractérisé en ce que** l'embout (5) présente une région d'enfoncement (51) avec laquelle il est enfoncé dans l'espace interne du profilé creux (3), l'élément d'étanchéité (7, 700) étant disposé au niveau de l'extrémité de la région d'enfoncement (51) tournée vers le profilé creux (3).

3. Dispositif de mesure de longueur selon l'une quelconque des revendications précédentes, **caractérisé en ce que** l'élément d'étanchéité (7, 700) se compose d'un élastomère.

4. Dispositif de mesure de longueur selon l'une quelconque des revendications précédentes, **caractérisé en ce que** l'embout (5), pour le montage sur le profilé creux (3), est réalisé au niveau d'un objet à mesurer.

5. Dispositif de mesure de longueur selon l'une quelconque des revendications précédentes, **caractérisé en ce que** l'embout (5) présente un raccord d'air comprimé (54) afin de guider de l'air comprimé dans l'espace intérieur du profilé creux (3).

6. Dispositif de mesure de longueur selon la revendication 5, **caractérisé en ce que** l'élément d'étanchéité (7, 700) est disposé et réalisé de telle sorte que l'air comprimé introduit par le raccord d'air comprimé (54) parvienne sur l'élément d'étanchéité (7, 700) et soit dévié, et en outre l'élément d'étanchéité (7, 700) présente une ouverture de sortie (74, 740) pour l'air comprimé tournée vers l'espace intérieur du profilé creux (3).

7. Dispositif de mesure de longueur selon la revendication 6, **caractérisé en ce que** l'élément d'étanchéité (7, 700) présente, entre l'emplacement d'incidence de l'air comprimé et l'ouverture de sortie (74, 740), un canal de guidage (73, 730) pour l'air comprimé.

8. Dispositif de mesure de longueur selon l'une quelconque des revendications précédentes, **caractérisé en ce que** l'élément d'étanchéité (7, 100) est réalisé de telle sorte que sa région centrale qui surmonte la dimension intérieure du profilé creux (3), ne soit pas plus flexible que sa surface périphérique (71, 710) avec laquelle il s'applique hermétiquement contre la surface intérieure (32) du profilé creux (3).

9. Dispositif de mesure de longueur selon la revendication 8, **caractérisé en ce que** l'élément d'étanchéité (7, 700) se compose de deux matériaux différents, à savoir un premier plastique au niveau de la surface périphérique, avec laquelle il s'applique hermétiquement contre la surface intérieure (32) du profilé creux (3), et un deuxième plastique dans sa région centrale, le deuxième plastique n'étant pas plus flexible que le premier plastique.
